# EUROPEAN PATENT SPECIFICATION

(11) **EP 2 690 135 B1**
(45) Date of publication and mention of the grant of the patent: **06.05.2015**
(21) Application number: 12759937.1
(22) Date of filing: 16.03.2012
(51) Int. Cl.: C08L 15/00, B60C 1/00, C08C 19/00, C08K 3/36, C08L 9/00

(54) **RUBBER COMPOSITION AND MANUFACTURING PROCESS THEREFOR, AND TIRE**
KAUTSCHUKZUSAMMENSETZUNG, HERSTELLUNGSVERFAHREN DAFÜR UND REIFEN
COMPOSITION DE CAOUTCHOUC ET PROCÉDÉ POUR LE FABRIQUER ET PNEU

(30) Priority: 24.03.2011 JP 2011065791; 01.09.2011 JP 2011190435
(43) Date of publication of application: 29.01.2014
(73) Proprietor: JSR Corporation, Tokyo 105-8640 (JP)
(72) Inventor: OKADA, Koji, Tokyo 105-8640 (JP); TANAKA, Ryoji, Tokyo 105-8640 (JP)
(74) Representative: TBK
(86) International application number: PCT/JP2012/056816
(87) International publication number: WO 2012/128194

(56) References cited:
- EP-A1- 1 661 946
- EP-A1- 2 138 537
- JP-A- 2004 524 420
- US-A- 5 902 856

## Description

### Technical Field

The present invention relates to a rubber composition and a method for producing the same, and a tire, and more particularly to a rubber composition suitable, for example, for tire tread use and a method for producing the same, and a tire obtained from the rubber composition.

### Background Art

As a rubber composition used for tire treads of automobiles, there has conventionally been known one in which carbon black is blended as a reinforcing agent together with a rubber component composed of a conjugated diene rubber.

Further, with a recent increasing demand for a reduction in fuel consumption of automobiles, in order to comply with such a demand, for the purpose of a reduction in rolling resistance of tires, silica has been used as a reinforcing agent.

However, the rubber composition in which silica is blended as the reinforcing agent has a problem that the silica particles are liable to coagulate with each other and less likely to be uniformly dispersed. In order to solve such a problem, there have been proposed rubber compositions in which silica and dispersing agents are added to rubber components composed of protic amino group-containing conjugated diene polymers (see Patent Document 1 to Patent Document 3).

### Prior-Art Documents

### Patent Documents

Patent Document 1: JP-A-2009-263536
Patent Document 2: JP-A-2009-263537
Patent Document 3: JP-A-2009-263538

### Summary of the Invention

### Problems That to be Solved by the Invention

However, in the above-mentioned rubber compositions, it has become clear that there is encountered a problem of failing to obtain sufficient impact resilience in rubber elastic bodies obtained from the rubber compositions, since dispersibility of silica is excessively increased.

The present invention has been made on the basis of the circumstances as described above, and an object thereof is to provide a rubber composition that can obtain a rubber elastic body having small rolling resistance and moreover excellent impact resilience and a method for producing the same.

Further, another object of the present invention is to provide a tire having small rolling resistance and moreover excellent impact resilience.

### Means for Solving the Problems

A method for producing a rubber composition of the present invention comprises kneading a rubber component containing a conjugated diene polymer (A) having at least one functional group selected from a tertiary amino group, a thiol group, a hydroxyl group, an epoxy group, a carboxylic acid group, a thioepoxy group, a hydrocarbylthio group and a hydrocarbylsilyl group and a conjugated diene polymer (B) having no functional group chemically bondable to silica, silica (C) and a dispersing agent (D) composed of an organic compound having at least one element selected from the group consisting of nitrogen, carbonyl oxygen and ether oxygen.

In the method for producing a rubber composition of the present invention, the dispersing agent (D) is composed of an organic compound represented by the following formula (1) or the following formula (2):

Formula (1): A-X-H

(wherein A represents a group containing nitrogen and/or oxygen, X represents a hydrocarbylene group or a polyoxyalkylene chain each having 1 to 20 carbon atoms, which may be straight-chain or branched, and H represents hydrogen.)

Formula (2): M(A'-X-H)ₙ

(wherein A' represents a group containing nitrogen and/or oxygen, X represents a hydrocarbylene group or a polyoxyalkylene chain each having 1 to 20 carbon atoms, which may be straight-chain or branched, H represents hydrogen, M represents a metal element, and n is an integer of 1 to 6.)

In the method for producing a rubber composition of the present invention, the conjugated diene polymer (B), the silica (C) and the dispersing agent (D) are kneaded, and thereafter, the conjugated diene polymer (A) is added thereto, followed by kneading.

Additionally, the method for producing a rubber composition of the present invention, the conjugated diene polymer (A), the conjugated diene polymer (B) and the silica (C) are kneaded, and thereafter, the dispersing agent (D) is added thereto, followed by kneading.

A rubber composition of the present invention is obtained by kneading a rubber component comprising a conjugated diene polymer (A) having at least one functional group selected from a tertiary amino group, a thiol group, a hydroxyl group, an epoxy group, a carboxylic acid group, a thioepoxy group, a hydrocarbylthio group and a hydrocarbylsilyl group and a conjugated diene polymer (B) having no functional group chemically bondable to silica, silica (C) and a dispersing agent (D) composed of an organic compound having at least one element selected from the group consisting of nitrogen, carbonyl oxygen and ether oxygen.

In the rubber composition of the present invention, it is preferable that the dispersing agent (D) is composed of an organic compound represented by the above formula (1) or the above formula (2).

Additionally, the rubber composition of the present invention is preferably obtained by kneading the conjugated diene polymer (B), the silica (C) and the dispersing agent (D), and thereafter, adding the conjugated diene polymer (A) thereto, followed by kneading.

Furthermore, the rubber composition of the present invention is preferably obtained by kneading the conjugated diene polymer (A), the conjugated diene polymer (B) and the silica (C), and thereafter, adding the dispersing agent (D) thereto, followed by kneading.

Additionally, a rubber composition comprises a rubber component comprising a conjugated diene polymer (A) having at least one functional group selected from a tertiary amino group, a thiol group, a hydroxyl group, an epoxy group, a carboxylic acid group, a thioepoxy group, a hydrocarbylthio group and a hydrocarbylsilyl group and a conjugated diene polymer (B) having no functional group chemically bondable to silica, and at least silica (C) and a dispersing agent (D) composed of an organic compound having at least one element selected from the group consisting of nitrogen, carbonyl oxygen and ether oxygen, which are added thereto.

A tire of the present invention has a tread obtained from the rubber composition prepared by the above production method.

### Effect of the Invention

According to a rubber composition of the present invention, silica is contained in a rubber component in a properly dispersed state, so that a rubber elastic body having small rolling resistance and moreover excellent impact resilience can be obtained.

According to a method for producing a rubber composition of the present invention, silica can be allowed to be contained in a rubber component in a properly dispersed state, so that the rubber composition from which a rubber elastic body having small rolling resistance and moreover excellent impact resilience can be obtained can be produced.

Accordingly, the rubber composition of the present invention is suitable as a rubber composition for obtaining a tire tread.

### Mode for Carrying Out the Invention

Modes for carrying out the present invention will be described below.

A rubber composition of the present invention comprises a rubber component containing component (A) composed of a conjugated diene polymer (hereinafter referred to as a "specific functional group-containing conjugated diene polymer) having at least one functional group (hereinafter referred to as a "specific functional group") selected from a tertiary amino group, a thiol group, a hydroxyl group, an epoxy group, a carboxylic acid group, a thioepoxy group, a hydrocarbylthio group and a hydrocarbylsilyl group and component (B) composed of a conjugated diene polymer (hereinafter referred to as a "functional group-free diene polymer") having no functional group chemically bondable to silica, and component (C) composed of silica and component (D) composed of a dispersing agent that are added thereto.

### <Component (A)>

The specific functional group-containing conjugated diene polymer as component (A) constitutes the rubber component in the rubber composition of the present invention. This specific functional group-containing conjugated diene polymer can remove a low-molecular-weight component that causes deterioration in rolling resistance, since its molecular weight distribution is easily controlled.

In such a specific functional group-containing conjugated diene polymer, a polymer of a conjugated diene compound or a copolymer of a conjugated diene compound and an aromatic vinyl compound can be used as the conjugated diene polymer acting as a base polymer.

As the conjugated diene compounds, 1,3-butadiene, isoprene, 1,3-pentadiene, 2,3-dimethyl-1,3-butadiene, 2-phenyl-1,3-butadiene, 1,3-hexadiene and the like may be used either alone or as a combination of two or more thereof. Of these, 1,3-butadiene, isoprene and 2,3-dimethyl-1,3-butadiene are preferable.

Further, as the aromatic vinyl compounds, styrene, α-methylstyrene, 1-vinylnaphthalene, 3-vinyltoluene, ethylvinylbenzene, divinylbenzene, 4-cyclohexylstyrene, 2,4,6-trimethylstyrene, tert-butoxydimethylsilylstyrene, isopropoxydimethylsilylstyrene and the like may be used either alone or as a combination of two or more thereof. Of these, styrene is preferable.

Preferable specific examples of the conjugated diene polymers acting as the base polymer include butadiene polymers, styrene-butadiene copolymers, butadiene-isoprene copolymers, styrene-isoprene copolymers, styrene-butadiene-isoprene copolymers and the like.

In the specific functional group-containing conjugated diene polymer, the specific functional group is at least one functional group selected from a tertiary amino group, a thiol group, a hydroxyl group, an epoxy group, a carboxylic acid group, a thioepoxy group, a hydrocarbylthio group and a hydrocarbylsilyl group, of functional groups chemically bondable (including covalent bonding, hydrogen bonding and an interaction by molecular polarity) to a silanol group in silica. Of such specific functional groups, a tertiary amino group or a thiol group is preferable.

Methods for introducing the specific functional group into the conjugated diene polymer as the base polymer include a method of polymerizing monomers for obtaining the conjugated diene polymer as the base polymer, for example, the conjugated diene compound and the aromatic vinyl compound, by living anionic polymerization, and terminating the polymerization using a compound (hereinafter referred to as a "specific functional group-containing compound") having a specific functional group as a polymerization terminator, a method of copolymerizing monomers for obtaining the conjugated diene polymer as the base polymer, for example, the conjugated diene compound and the aromatic vinyl compound, with a monomer (hereinafter referred to as a "specific functional group-containing monomer) copolymerizable with a conjugated diene compound having a specific functional group, and the like.

Of the specific functional group-containing compounds, the compounds for introducing a tertiary amino group include N-[3-(trimethoxysilyl)-propyl]-N,N'-diethyl-N'-trimethylsilyl-ethane-1,2-diamine, N-[3-(triethoxysilyl)- propyl]-N,N'-diethyl-N'-trimethylsilyl-ethane-1,2-diamine, N-[3-(methyldimethoxysilyl)-propyl]-N,N'-diethyl-N'-trimethylsilyl-ethane-1,2-diamine, N-[3-(methyldimethoxysilyl)-propyl]-N,N'-diethyl-N'-trimethylsilyl-p-phenylenediamine, N-[3-(triethoxysilyl)-propyl]-N,N'-diethyl-N'-trimethylsilyl-p-phenylenediamine, N-[3-(diethoxymethylsilyl)-propyl]-N-ethyl-N'-(2-ethoxyethyl)-N'-trimethylsilyl-ethane-1,2-diamine, N-[3-(tripropoxysilyl)-propyl]-N-propyl-N'-(2-ethoxyethyl)-N'-triethylsilyl-p-phenylenediamine, N-[2-(diethoxymethylsilyl)-1-methylethyl]-N-ethyl-N'-(2-diethylamino-ethyl) N'-triethylsilyl-ethane-1,2-diamine, N-[3-(triethoxysilyl)-propyl]-N-ethyl-N'-(2-diethylaminoethyl)-N'-triethylsilyl-ethane-1,2-diamine, N-[2-(trimethoxysilyl)-ethyl]-N,N',N'-trimethylethane-1,2-diamine, N-[2-(dimethoxymethylsilyl)-ethyl]-N-ethyl-N',N'- dimethylethane-1,2-diamine, N-[3-(trimethoxysilyl)-propyl]-N,N',N'-trimethylpropane-1,3-diamine, N-[3-(di-methoxymethylsilyl)-propyl]-N-ethyl-N',N'-dimethylpropane-1,3-diamine, N-[3-(triethoxysilyl)-propyl]-N,N',N'-triethyl-2-methylpropane-1,3-diamine, N-[3-(dimethoxymethylsilyl)-propyl]-2,N,N',N'-tetramethylpropane-1,3-diamine, N-(2-dimethylaminoethyl)-N'-[2-(trimethoxysilyl)-ethyl]-N,N'-dimethylethane-1,2-diamine, N-[2-(diethoxypropylsilyl)-ethyl]-N'-(3-ethoxypropyl)-N,N'-dimethylethane-1,2-diamine, N-[2-(trimethoxysilyl)-ethyl]-N'-methoxymethyl-N,N'-dimethylethane-1,2-diamine, N-[2-(trimethoxysilyl)-ethyl]-N,N'-dimethyl-N'-(2-trimethylsilylethyl)- ethane-1,2-diamine, N-[2-(triethoxysilyl)-ethyl]-N,N'-diethyl-N'-(2-dibutylmethoxysilylethyl)-ethane-1,2-diamine,

3-[3-(trimethylsilylethylamino)-1-pyrrolidinyl]-propyl-methyldiethoxysilane, 3-[3-(trimethylsilylpropylamino)-1-pyrrolidinyl]-propyl-triethoxysilane, 3-(4-trimethylsilyl-1-piperazino)propylmethyldimethoxysilane, 3-(4-trimethylsilyl-1-piperazino)propyltriethoxysilane, 3-(4-trimethylsilyl-1-piperazino)propyltributoxysilane, 4-(4-trimethylsilyl-1-piperazinyl)butyltriethoxysilane, 1-[3-(triethoxysilyl)-propyl]-4-methylpiperazine, 1-[3-(diethoxyethylsilyl)-propyl]-4-methylpiperazine, 2-(triethoxysilyl)-1,4-diethylpiperazine, 2-(dimethoxymethylsilyl)-1,4-dimethylpiperazine, 2-(3-triethoxysilyl-propyl)-1,4-diethylpiperazine, 2-(3-dimethoxymethylsilyl-propyl)-1,4-dimethylpiperazine, 3-piperidinopropyltrimethoxysilane, 3-piperidinopropyltriethoxysilane, 3-piperidinopropylmethyldimethoxysilane, 3-piperidinopropylethyldimethoxysilane, 3-piperidinopropylmethyldiethoxysilane, 3-piperidinopropylethyldiethoxysilane, 3-(3-tri-methylsilyl-1-imidazolidinyl)propylethyldiethoxysilane, 3-(3-trimethylsilyl-1-imidazol-idinyl)propyltriethoxysilane, 1-[3-(trimethoxysilyl)-propyl]-3-methylimidazolidine, 1-[3-(diethoxyethylsilyl)-propyl]-3-ethylimidazolidine, 1-(2-ethoxyethyl)-3-[3-(trimethoxysilyl)-propyl]-imidazolidine, 2-(trimethoxysilyl)-1,3-dimethylimidazolidine, 2-(3-trimethoxysilylpropyl)-1,3-dimethylimidazolidine, 2-(diethoxyethylsilyl)-1,3-diethylimidazolidine, 2-[3-(2-dimethylaminoethyl)-2-(ethyldimethoxysilyl)-imidazolidine-1-yl]-ethyl-dimethylamine, 2-(3-diethoxyethylsilyl-propyl)-1,3-diethylimidazolidine, 2-[3-(2-dimethylaminoethyl)-2-(3-ethyldimethoxysilyl-propyl)-imidazolidine-1-yl]-ethyl-dimethylamine, N-(3-trimethoxy-silylpropyl)-4,5-dihydroimidazole, N-(3-triethoxysilylpropyl)-4,5-dihydroimidazole, N-(3-trimethoxysilylpropyl)-4,5-imidazole, N-(3-triethoxysilylpropyl)-4,5-imidazole,

3-(3-trimethylsilyl-1-hexahydropyrimidinyl)propylmethyldimethoxysilane, 3-(3-trimethylsilyl-1-hexahydropyrimidinyl)propyltriethoxysilane, 1-[3-(triethoxysilyl)-propyl]-3-methylhexahydropyrimidine, 1-[3-(dimethoxymethylsilyl)-propyl]-3-methylhexahydropyrimidine, 3-[3-(tributoxysilyl)-propyl]-1-methyl-1,2,3,4-tetrahydro-pyrimidine, 3-[3-(dimethoxymethylsilyl)-propyl]-1-ethyl-1,2,3,4-tetrahydropyrimidine, 2-{3-[3-(trimethoxysilyl)-propyl]-tetrahydropyrimidine-1-yl}-ethyldimethylamine, 5-(triethoxysilyl)-1,3-dipropylhexahydropyrimidine, 5-(diethoxyethylsilyl)-1,3-diethylhexahydropyrimidin, 5-(trimethoxysilyl)-1,3-bis-(2-methoxyethyl)-hexahydropyrimidine, 5-(3-triethoxysilyl-propyl)-1,3-dipropylhexahydropyrimidine, 5-(3-diethoxyethylsilyl-propyl)-1,3-diethylhexahydropyrimidine, 5-(3-trimethoxysilyl-propyl)-1,3-bis-(2-methoxyethyl)-hexahydropyrimidine, 5-(3-ethyldimethoxysilyl-propyl)-1,3-bis-(2-trimethylsilylethyl)-hexahydropyrimidine,

3-morpholinopropyltrimethoxysilane, 3-morpholinopropyltriethoxysilane, 3-morpholinopropylmethyldimethoxysilane, 3-morpholinopropylethyldimethoxysilane, 3-morpholinopropylmethyldiethoxysilane, 3-morpholinopropylethyldiethoxysilane, 3-hexamethyleneiminopropyltrimethoxysilane, 3-hexamethyleneiminopropyltriethoxysilane, 3-hexamethyleneiminopropylmethyldimethoxysilane, 3-hexamethyleneiminopropylethyl-dimethoxysilane, 3-hexamethyleneiminopropylmethyldiethoxysilane, 3-hexamethyleneiminopropylethyldiethoxysilane, N-(1,3-dimethylbutylidene)-3-(trimethoxy-silyl)-1-propaneamine, N-(cyclohexylidene)-3-(trimethoxysilyl)-1-propaneamine, N-(cyclo-hexylidene)-3-(methyldiethoxysilyl)-1-propaneamine, N-(cyclohexylidene)-3-(ethyl-dimethoxysilyl)-1-propaneamine, [(3-methyl-3-diethylamino)propyl]trimethoxysilane, [(3-methyl-3-diethylamino)propyl]triethoxysilane and the like.

Specific examples of the compounds for introducing a thiol group include S-trimethylsilylmercaptopropylmethyldimethoxysilane, S-trimethylsilylmercaptopropyltri-methoxysilane, S-trimethylsilylmercaptopropyltriethoxysilane, S-trimethylsilylmercaptopropylmethyldiethoxysilane, S-trimethyl-silylmercaptoethyltrimethoxysilane, S-trimethylsilylmercaptoethyltriethoxysilane, S-trimethylsilylmercaptoethylmethyldimethoxysilane, S-trimethylsilylmercaptoethyl-methyldiethoxysilane and the like.

Specific examples of the compounds for introducing an epoxy group or a thioepoxy group include 2-glycidoxyethyltrimethoxysilane, 2-glycidoxyethyltriethoxysilane, (2-glycidoxyethyl)methyldimethoxysilane, 3-glycidoxypropyltrimethoxysilane, (3-glycidoxypropyl)methyldimethoxysilane, 2-(3,4-epoxycyclohexyl)ethyltrimethoxysilane, 2-(3,4-epoxycyclohexyl)ethyltriethoxysilane, 2-(3,4-epoxycyclohexyl)ethyl-(methyl)dimethoxysilane, 2-(3-triethoxysilylpropylthio)succinic acid-bis-[(3-ethyloxetane-3-yl)methyl] ester, ones in which the epoxy group in these compounds is replaced with a thioepoxy group and the like.

Specific examples of the compounds for introducing a hydrocarbylthio group include propylsulfanyltrimethoxysilane, propylsulfanylpropyltrimethoxysilane, ethylsulfanylethyltrimethoxysilane, 5-ethylsulfanyl-1-methylpentyltrimethoxysilane, 4-(triethoxysilyl)thioanisole and the like.

Specific examples of the compounds for introducing a hydrocarbylsilyl group include methyltrimethoxysilane, methyltriethoxysilane, methyltripropoxysilane, methyltriisopropoxysilane, ethyltrimethoxysilane, ethyltriethoxysilane, propyltriethoxysilane, butyltrimethoxysilane, phenyltrimethoxysilane, phenyltriethoxysilane, dimethyldimethoxysilane, methylphenyldimethoxysilane, vinyltrimethoxysilane, vinyltriethoxysilane, divinyldimethoxysilane, divinyldiethoxysilane and the like.

In addition, the compounds for introducing a hydroxyl group or a carboxylic acid group include 6,7-bis(trimethylsiloxy)-4-oxaheptyltriethoxysilane and carbon dioxide, respectively.

Of these, preferable ones are 1-(3-triethoxysilylpropyl)-2,2,5,5-tetramethyl-1-aza-2,5-disilacyclopentane, N,N',N'-tris(trimethylsilyl)-N-(2-aminoethyl)-3-aminopropyltri-ethoxysilane, 1-trimethylsilyl-2,2-dimethoxy-1-aza-2-silacyclopentane, N-[3-(trimethoxysilyl)-propyl]-N,N'-diethyl-N'-trimethylsilyl-ethane-1,2-diamine, N-[3-(triethoxysilyl)-propyl]-N,N'-diethyl-N'-trimethylsilyl-ethane-1,2- diamine, 3-(4-trimethyl-silyl-1-piperazino)propyltriethoxysilane, N-[2-(trimethoxysilyl)-ethyl]-N,N',N'-trimethyl-ethane-1,2-diamine, N-(1,3-dimethylbutylidene)-3-(triethoxysilyl)-1-propaneamine, 1-[3-(triethoxysilyl)-propyl]-4-methylpiperazine, 2-(trimethoxysilyl)-1,3-dimethylimidazolidine, 2-(3-trimethoxysilyl-propyl)-1,3-dimethylimidazolidine, 3-dimethylaminopropyltri-methoxysilane, 3-diethylaminopropyltrimethoxysilane, 3-dimethylaminopropyl-triethoxysilane, 3-diethylaminopropyltriethoxysilane, N-(3-trimethoxysilylpropyl)-4,5-dihydroimidazole, N-(3-triethoxysilylpropyl)-4,5-dihydroimidazole, N-(3-trimethoxy-silylpropyl)-4,5-imidazole, N-(3-triethoxysilylpropyl)-4,5-imidazole, bis-(3-dimethyl-aminopropyl)-dimethoxysilane, [3-(diethylamino)propyl]trimethoxysilane, [3-(dimethyl-amino)propyl]triethoxysilane, S-trimethylsilylmercaptopropylmethyldimethoxysilane, S-tri-methylsilylmercaptopropyltrimethoxysilane, S-trimethylsilylmercaptopropyltriethoxysilane and S-trimethylsilymercaptopropylmethyldiethoxysilane.

Further, specific examples of the specific functional group-containing monomers include, for example, 1-(4-N,N-dimethylaminophenyl)-1-phenylethylene, 1-(4-N,N-diethyl-aminophenyl)-1-phenylethylene, 1-(4-N,N-dipropylaminophenyl)-1-phenylethylene, 1-(4-N,N-dibutylaminophenyl)-1-phenylethylene, 1-(4-N,N-dimethoxyaminophenyl)-1-phenyl-ethylene, 1-(4-N,N-diethoxyaminophenyl)-1-phenylethylene, 1-(4-N,N-dipropoxyaminophenyl)-1-phenylethylene, 1-(4-N,N-dibutoxyaminophenyl)-1-phenylethylene and the like. Of these, 1-(4-N,N-dimethylaminophenyl)-1-phenylethylene is preferable, from the viewpoint that fuel cost-saving properties are significantly improved.

In such a specific functional group-containing conjugated diene polymer, the content of 1,2-vinyl bonds in a conjugated diene compound-derived structural unit is preferably from 30 to 70 mol%. When the content of 1,2-vinyl bonds is excessively small, there is a possibility that a balance between wet grip performance and rolling resistance in the rubber elastic body obtained from the rubber composition is deteriorated. On the other hand, when the content of 1,2-vinyl bonds is excessively large, there is a possibility that wear resistance of the rubber elastic body obtained from the rubber composition is extremely decreased.

Here, the content of 1,2-vinyl bonds in the conjugated diene compound-derived structural unit can be calculated from a 500 MHz ¹H-NMR spectrum.

In the rubber of the present invention, a part of the rubber component can also be coupled using a multifunctional modifier. Cold flow properties are improved by coupling a part of the rubber component with the multifunctional modifier as described above. When the multifunctional modifier is used, the order of reacting the multifunctional modifier is not limited. The conjugated diene polymer may be coupling reacted with the multifunctional modifier, followed by reacting the remaining conjugated diene polymer with the specific functional group-containing compound; the conjugated diene polymer may be reacted with the specific functional group-containing compound, followed by reacting the remaining conjugated diene polymer with the multifunctional modifier; or these may be reacted at the same time.

The multifunctional modifiers used for coupling include at least one compound selected from the group consisting of (a) isocyanate compounds and/or isothiocyanate compounds, (b) amide compounds and/or imide compounds, (c) pyridyl-substituted ketone compounds and/or pyridyl-substituted vinyl compounds, (d) silicon compounds, (e) ester compounds, (f) ketone compounds and (g) tin compounds.

Of these compounds, suitable examples of the isocyanate compounds and/or isothiocyanate compounds (a) include 2,4-tolylene diisocyanate, 2,6-tolylene diisocyanate, diphenylmethane diisocyanate, polymeric type diphenylmethane diisocyanate (C-MDI), isophorone diisocyanate, hexamethylene diisocyanate, 1,3,5-benzene triisocyanate, phenyl-1,4-diisothiocyanate and the like.

Further, suitable examples of the amide compounds or imide compounds (b) include amide compounds such as succinamide, phthalamide, N,N,N',N'-tetramethylphthalamide, oxamide and N,N,N',N'-tetramethyloxamide, imide compounds such as succinimide, N-methylsuccinimide, maleimide, N-methylmaleimide, phthalimide and N-methylphthalimide, and the like.

Furthermore, suitable examples of the pyridyl-substituted ketone compounds or pyridyl-substituted vinyl compounds (c) include dibenzoylpyridine, diacetylpyridine, divinylpyridine and the like.

In addition, suitable examples of the silicon compounds (d) include dibutyldichlorosilicon, methyltrichlorosilicon, methyldichlorosilicon, tetrachlorosilicon, triethoxymethylsilane, triphenoxymethylsilane, trimethoxysilane, methyltriethoxysilane, 4,5-epoxyheptylmethyldimethoxysilane, bis(triethoxysilylpropyl)tetrasulfide and the like.

Besides, suitable examples of the ester compounds (e) include diethyl adipate, diethyl malonate, diethyl phthalate, diethyl glutarate, diethyl maleate and the like.

Moreover, specific examples of the ketone compounds (f) suitably include N,N,N',N'-tetramethyl-4,4'-diaminobenzophenone, N,N,N',N'-tetraethyl(4,4'-diamino)-benzophenone, N,N-dimethyl-1-aminobenzoquinone, N,N,N',N'-tetramethyl-1,3-diaminobenzoquinone, N,N-dimethyl-1-aminoanthraquinone, N,N,N',N'-tetramethyl-1,4-diaminoanthraquinone and the like.

Additionally, suitable examples of the tin compounds (g) include tetrachlorotin, tetrabromotin, trichlorobutyltin, trichloromethyltin, trichlorooctyltin, dibromodimethyltin, dichlorodimethyltin, dichlorodibutyltin, dichlorodioctyltin, 1,2-bis(trichlorostannyl)ethane, 1,2-bis(methyldichlorostannylethane), 1,4-bis(trichlorostannyl)butane, 1,4-bis(methyl-dichlorostannyl)butane, ethyltin tristearate, butyltin trisoctanoate, butyltin trisstearate, butyltin trislaurate, dibutyltin bisoctanoate, dibutyltin bisstearate, dibutyltin bislaurate and the like.

These compounds may be used either alone or as a combination of two or more thereof.

### <Component (B)>

In the rubber composition of the present invention, the functional group-free conjugated diene polymer as component (B) is a conjugated diene polymer having no functional group chemically bondable to silica, and constitutes the rubber component together with the specific functional group-containing conjugated diene polymer as component (A).

The "functional group chemically bondable to silica" as used herein means a functional group chemically bondable (including covalent bonding, hydrogen bonding and an interaction by molecular polarity) to a silanol group in silica, and examples thereof include a primary amino group, a secondary amino group, a quaternary ammonium salt residue and the like, in addition to the specific functional groups described above.

As such functional group-free conjugated diene polymers, natural rubber, butadiene rubber, synthetic isoprene rubber, styrene-butadiene rubber and the like can be used.

The content of such component (B) is preferably 5 to 40 parts by mass, and more preferably from 10 to 35 parts by mass, based on 100 parts by mass of the total of component (A) and component (B). When the content of component (B) is excessively small, there is a possibility that a balance between rolling resistance and impact resilience is deteriorated. On the other hand, when the content of component (B) is excessively large, there is a possibility that rolling resistance is deteriorated.

### <Component (C)>

In the rubber composition of the present invention, component (C) composed of granular silica is contained. This silica may be any, as long as it is generally used as a filler. However, it is preferably synthetic silicic acid having a primary particle size of 50 nm or less, preferably 5 to 50 nm.

The content of such component (C) is preferably from 20 to 100 parts by mass based on 100 parts by mass of the total of component (A) and component (D) described later. When the content of component (C) is either excessively small or excessively large, a balance between hardness and rolling resistance is deteriorated.

### <Component (D)>

The dispersing agent as component (D) has not only an action of dispersing the silica as component (C), but also an action of suppressing the silica from being excessively dispersed by the specific functional group in the specific functional group-containing conjugated diene polymer as component (A).

As such a dispersing agent, there is used an organic compound having at least one element selected from the group consisting of nitrogen, carbonyl oxygen and ether oxygen, preferably one composed of an organic compound represented by the following formula (1) or the following formula (2):

Formula (1): A-X-H

(wherein A represents a group containing nitrogen and/or oxygen, X represents a hydrocarbylene group or a polyoxyalkylene chain each having 1 to 20 carbon atoms, which may be straight-chain or branched, and H represents hydrogen.)

Formula (2): M(A'-X-H)ₙ

(wherein A' represents a group containing nitrogen and/or oxygen, X represents a hydrocarbylene group or a polyoxyalkylene chain each having 1 to 20 carbon atoms, which may be straight-chain or branched, H represents hydrogen, M represents a metal element, and n is an integer of 1 to 6.)

In group A of the above-mentioned formula (1), specific examples of the nitrogen-containing functional groups include a primary amino group, a secondary amino group, a tertiary amino group, a quaternary ammonium salt residue and the like. Further, specific examples of the oxygen-containing functional groups include a hydroxyl group, a hydrocarbyloxy group, an acyl group and the like. Group A' of the above-mentioned formula (2) includes a group in which one hydrogen atom is removed from the above-mentioned group A, a carbonyl group and the like. Further, the functional groups containing nitrogen and oxygen include an amido group.

Furthermore, group X in the above-mentioned formula (1) and formula (2) is preferably one having 8 to 24 carbon atoms as the hydrocarbylene group, and one having 8 to 30 carbon atoms as the polyoxyalkylene chain.

In addition, in group M of the above-mentioned formula (2), specific examples of the metal elements include Na, K, Mg, Ag, Ca, Ti, Cu, Fe, Zn, Co, Al and the like. Of these, Zn and Ca are preferable.

As the nitrogen-containing organic compound, a hydrocarbyl primary amine, a hydrocarbyl secondary amine, a hydrocarbyl tertiary amine and the like can be used, and a hydrocarbyl primary amine, a hydrocarbyl secondary amine, a hydrocarbyl tertiary amine and a fatty acid salt thereof, in which the hydrocarbyl group has 6 or more carbon atoms are preferable.

Specific examples of the hydrocarbyl tertiary amines include N,N-dimethyllaurylamine; N,N-dimethylmyristylamine; N,N-dimethylpalmitylamine; N,N-dimethylstearylamine; N,N-dimethyloleylamine; N,N-diethyllaurylamine; N,N-diethyl-myristylamine; N,N-diethylpalmitylamine; N,N-dimethylstearylamine; N,N-diethylstearylamine; N,N-diethyloleylamine; N,N-dipropyllaurylamine; N,N-dipropylmyristylamine; N,N-dipropylpalmitylamine; N,N-dipropylstearylamine; N,N-di-propyloleylamine; N-ethyl-N-methylstearylamine; N-ethyl-N-propylstearylamine; N-methyl-N-propylstearylamine; N-laurylpyrrolidine; N-myristylpyrrolidine; N-palmityl-pyrrolidine; N-stearylpyrrolidine; N-oleylpyrrolidine; N-laurylpiperidine; N-myristylpiperidine; N-palmitylpiperidine; N-stearylpiperidine; N-oleylpiperidine; and the like.

Further, as the fatty acid salt of the hydrocarbyl tertiary amine, an addition salt of the above-mentioned hydrocarbyl tertiary amine and fatty acid can be used. Here, although there is no particular limitation on the fatty acid, a saturated or unsaturated fatty acid having 12 to 24 carbon atoms can be used.

Furthermore, specific examples of the hydrocarbyl secondary amines include di-2-ethylhexylamine, dibutylnamine, dicyclohexylamine, dibenzylamine, cyclohexyl-2-ethylhexylamine, benzylcyclohexylamine, benzyl-2-ethylhexylamine, dodecamethyleneimine, tetradecamethyleneimine, hexadecamethyleneimine and the like.

In addition, specific examples of the hydrocarbyl primary amines include 2-ethylhexylamine, cyclohexylamine, benzylamine and the like.

As the carbonyl oxygen-containing organic compound, it is preferable to use a carboxylic acid metal salt or a carboxylic acid ester.

As acid components constituting the carboxylic acid metal salts, saturated fatty acids and unsaturated fatty acids can be used, and the carbon number of these fatty acids is usually from 4 to 30, preferably from 8 to 24 and more preferably from 12 to 20.

Specific examples of the saturated fatty acids include butanoic acid, butyric acid, pentanoic acid, hexanoic acid, heptanoic acid, octanoic acid, nonanoic acid, decanoic acid dodecanoic acid, tetradecanoic acid, pentadecanoic acid, hexadecanoic acid, palmitoyl acid, heptadecanoic acid, octadecanoic acid, octadecenoic acid, octadecadienoic acid, octadecatrienoic acid, nonadecanoic acid, icosanoic acid, docosanoic acid, hexadocosanoic acid, octadocosanoic acid and the like.

Further, specific examples of the unsaturated fatty acids include monounsaturated fatty acids such as crotonic acid, myristoleic acid, palmitoleic acid, oleic acid, elaidic acid, vaccenic acid, gadoleic acid, erucic acid and nervonic acid, diunsaturated fatty acids such as linoleic acid, triunsaturated fatty acids, α-linolenic acid, eleostearic acid, tetraunsaturated fatty acids, stearidonic acid, arachidonic acid, pentaunsaturated fatty acids, eicosapentaenoic acid, clupanodonic acid, hexaunsaturated fatty acids and docosahexaenoic acid, and the like.

Specific examples of the metal components constituting the carboxylic acid metal salts include Na, K, Mg, Ag, Ca, Ti, Cu, Fe, Zn, Co, Al and the like. Of these, Zn and Ca are preferable.

As the carboxylic acid ester, it is preferable to use an esterified product of a polyvalent carboxylic acid and a (poly)oxyalkylene derivative.

Specific examples of the polyvalent carboxylic acids include divalent aromatic carboxylic acids such as maleic acid, maleic anhydride, phthalic acid, phthalic anhydride and naphthalenedicarboxylic acid, trivalent aromatic carboxylic acids such as trimellitic acid and trimellitic anhydride, tetravalent aromatic carboxylic acids such as pyromellitic acid and pyromellitic anhydride, and the like.

As the (poly)oxyalkylene derivative, for example, a compound having one or more, preferably 1 or 2 hydroxyl groups and having a (poly)oxyalkylene group with an average polymerization degree of 1 or more can be used. Examples thereof include ether types such as (poly)oxyalkylene alkyl ethers; ester types such as (poly)oxyalkylene fatty acid monoesters; ether ester types such as (poly)oxyalkylene glycerin fatty acid esters; nitrogen-containing types such as (poly)oxyalkylene fatty acid amides and (poly)oxyalkylene alkylamines; and the like. Of these, ether types are preferable.

Specific examples of the ether type (poly)oxyalkylene derivatives include polyoxyalkylene- and unsaturation-containing polyoxyalkylene aliphatic ethers such as polyethylene glycol, polyoxyethylene lauryl ether, polyoxyethylene decyl ether, polyoxyethylene octyl ether, polyoxyethylene 2-ethylhexyl ether, polyoxyethylene polyoxypropylene lauryl ether, polyoxypropylene stearyl ether and polyoxyethylene oleyl ether, polyoxyethylene aromatic ethers such as polyoxyethylene benzyl ether, polyoxyethylene alkyl phenyl ether and polyoxyethylene benzylated phenyl ether, and the like. However, polyoxyalkylene aliphatic ethers are preferable. Further, polyoxyethylene alkyl ethers or polyoxyethylene alkenyl ethers are preferable, and particularly, the average polymerization degree of polyoxyethylene is preferably from 1 to 10, and the carbon number of an alkyl group or an alkenyl group is preferably from 8 to 18. Specific examples thereof include POE(3) octyl ether, POE(4) 2-ethylhexyl ether, POE(3) decyl ether, POE(5) decyl ether, POE(3) lauryl ether, POE(8) lauryl ether, POE(1) stearyl ether and the like, abbreviating polyoxyethylene as POE(n) and taking n as the average polymerization degree.

As the ether oxygen-containing organic compound, preferable one is a (poly)oxyalkylene derivative polyether compound. Preferable examples thereof include polyoxyalkylene- and unsaturation-containing polyoxyalkylene aliphatic ethers such as polyethylene glycol, polyoxyethylene lauryl ether, polyoxyethylene decyl ether, polyoxyethylene octyl ether, polyoxyethylene 2-ethylhexyl ether, polyoxyethylene polyoxypropylene lauryl ether, polyoxypropylene stearyl ether and polyoxyethylene oleyl ether, polyoxyethylene aromatic ethers such as polyoxyethylene benzyl ether, polyoxyethylene alkyl phenyl ether and polyoxyethylene benzylated phenyl ether, and the like. However, polyoxyalkylene aliphatic ethers are preferable. Further, polyoxyethylene alkyl or alkenyl ethers are preferable, and particularly, the average polymerization degree of polyoxyethylene is preferably from 1 to 10, and the carbon number of an alkyl group or an alkenyl group is preferably from 8 to 18. Specific examples thereof include POE(3) octyl ether, POE(4) 2-ethylhexyl ether, POE(3) decyl ether, POE(5) decyl ether, POE(3) lauryl ether, POE(8) lauryl ether, POE(1) stearyl ether and the like, abbreviating polyoxyethylene as POE(n) and taking n as the average polymerization degree.

These dispersing agents may be used either alone or as a combination of two or more thereof, as component (D).

Further, the content of such component (D) is preferably from 0.2 to 10 parts by mass based on 100 parts by mass of component (C) composed of the silica. When the content of component (D) is excessively small, appropriate dispersibility of the silica is not obtained, sometimes resulting in deterioration of rolling resistance.

### <Other Components>

In the rubber composition of the present invention, other components may be contained as needed, in addition to the above-mentioned components (A) to (D). Such other components include reinforcing agents such as carbon black, softening agents such as oil, silane coupling agents, waxes, antioxidants, stearic acid, zinc oxide, vulcanizing agents or cross-linking agents such as sulfur, vulcanization accelerators and the like.

### <Rubber Composition>

The rubber composition of the present invention can be prepared by kneading the above-mentioned respective components by using, for example, a kneading machine such as a plastomill, a Banbury mixer, a roll or an internal mixer, but can be preferably prepared by the following method (1) or method (2):
Method (1):
   A method of kneading the functional group-free conjugated diene polymer as component (B), the silica as component (C) and the dispersing agent as component (D), and thereafter adding the specific functional group-containing conjugated diene polymer as component (A) to the resulting kneaded material, followed by kneading.
Method (2):
   A method of kneading the specific functional group-containing conjugated diene polymer as component (A), the functional group-free conjugated diene polymer as component (B) and the silica as component (C), and thereafter adding the dispersing agent as component (D) to the resulting kneaded material, followed by kneading.
   According to such a method (1) or method (2), the silica can be allowed to be contained in the rubber component in a surely appropriately dispersed state, so that a balance between impact resilience and rolling resistance of a tire to be obtained is improved.

According to the rubber composition of the present invention, the silica is contained in the rubber component in an appropriately dispersed state, so that the rubber elastic body having small rolling resistance and moreover excellent impact resilience can be obtained.

Accordingly, the rubber composition of the present invention is suitable as a rubber composition for obtaining a tire tread.

### <Tire>

The tire of the present invention has the tread obtained from the above-mentioned rubber composition. This tire is produced by a usual method using the above-mentioned rubber composition.

That is to say, for example, the rubber composition (uncross-linked rubber composition) of the present invention is extruded according to the shape of the tire to be molded (specifically, the shape of the tread) to perform molding on a tire molding machine by a usual method, thereby producing an uncross-linked molded body for tire use. The tread is produced, for example, by heating and pressurizing this uncross-linked molded body for tire use in a vulcanizing machine, and this tread and other parts are assembled, thereby being able to produce the desired tire.

The tire of the present invention has the tread obtained from the above-mentioned rubber composition, so that it has small rolling resistance and moreover excellent impact resilience.

### Examples

Although specific examples of the present invention will be described below, the present invention is not construed as being limited to these examples.

In the following examples and comparative examples, measuring methods of various physical property values are as follows:
(1) The contained ratio (hereinafter also referred to as the "bonded styrene content") of structural units derived from an aromatic vinyl compound (styrene) in the specific functional group-containing conjugated diene polymer:
   Calculated from the 500 MHz, ¹H-NMR spectrum using deuterated chloroform as a solvent.
(2) The content (hereinafter also referred to as the "vinyl bond content") of 1,2-vinyl bonds in a conjugated diene compound-derived structural unit in the specific functional group-containing conjugated diene polymer:
   Calculated from the 500 MHz, ¹H-NMR spectrum.
(3) The glass transition temperature (Tg):
   Measured by differential scanning calorimetry (DSC) in accordance with ASTM D3418.
(4) The molecular weight of the base polymer involved in the specific functional group-containing conjugated diene polymer:
   Measurement was made by gel permeation chromatography (GPC), "HLC-8120GPC" (manufactured by Tosoh Corporation) under the following conditions, and the polystyrene-converted weight average molecular weight (Mw) was determined from the retention time corresponding to the maximum peak height of a GPC curve obtained.

### (GPC Conditions)

Column: Trade name "GMHXL" (manufactured by Tosoh Corporation), 2 columns
Column temperature: 40°C
Mobile phase: Tetrahydrofuran
Flow rate: 1.0 ml/min
Sample concentration: 10 mg/20 ml

### (5) The Mooney viscosity:

Measured in accordance with JIS K6300 using an L-rotor under conditions of preheating for 1 minute, rotor operation for 4 minutes and a temperature of 100°C.

### [Synthesis of Specific Functional Group-Containing Conjugated Diene Polymer]

### Synthesis Example 1:

First, an autoclave reactor having an internal volume of 5 liters in which the atmosphere was replaced with nitrogen was charged with 2,750 g of cyclohexane as a solvent, 50 g of tetrahydrofuran as an adjuster for adjusting the vinyl bond content, and 125 g of styrene and 375 g of 1,3-butadiene as monomers. After the temperature in the reactor was adjusted to 10°C, a cyclohexane solution containing 5.8 mmol of n-butyllithium as a polymerization initiator was added thereto to initiate polymerization. The polymerization was conducted under adiabatic conditions, and the maximum temperature reached 85°C.

After it was confirmed that the polymerization conversion reached 99%, 10 g was sampled from a reaction solution obtained, namely a polymer solution containing a copolymer composed of the conjugated diene compound and the aromatic vinyl compound, for measurement of the molecular weight (for measurement of the molecular weight of the base polymer).

Then, a cyclohexane solution containing 4.96 mmol of N-[3-(trimethoxysilyl)-propyl]-N,N'-diethyl-N'-trimethylsilyl-ethane-1,2-diamine (hereinafter referred to as "functional group-containing compound (1)) was added to the polymer solution, followed by reaction for 15 minutes. Thereafter, 2 g of 2,6-di-tert-butyl-p-cresol was added to a polymer solution obtained, and further, a desolvation treatment was performed by steam stripping using hot water adjusted to pH 9 with sodium hydroxide. Then, a drying treatment was performed with a hot roll controlled to 110°C to obtain a specific functional group-containing conjugated diene polymer (hereinafter referred to as "polymer (A1)").

The bonded styrene content, vinyl bond content, glass transition temperature and Mooney viscosity of the resulting polymer (A1) and the weight average molecular weight of the base polymer are shown in the following Table 1.

### Synthesis Example 2:

A specific functional group-containing conjugated diene polymer (hereinafter referred to as "polymer (A2)) was obtained in the same manner as in Synthetic Example 1 with the exception that 4.96 mmol of 3-(4-trimethylsilyl-1-piperazino)propyltriethoxysilane (hereinafter referred to as "functional group-containing compound (2)) was used in place of functional group-containing compound (1).

The bonded styrene content, vinyl bond content, glass transition temperature and Mooney viscosity of the resulting polymer (A2) and the weight average molecular weight of the base polymer are shown in the following Table 1.

### Synthesis Example 3:

A specific functional group-containing conjugated diene polymer (hereinafter referred to as "polymer (A3)) was obtained in the same manner as in Synthetic Example 1 with the exception that 4.96 mmol of [3-(diethylamino)propyl]triethoxysilane (hereinafter referred to as "functional group-containing compound (3)) was used in place of functional group-containing compound (1).

The bonded styrene content, vinyl bond content, glass transition temperature and Mooney viscosity of the resulting polymer (A3) and the weight average molecular weight of the base polymer are shown in the following Table 1.

### Synthesis Example 4:

A specific functional group-containing conjugated diene polymer (hereinafter referred to as "polymer (A4)) was obtained in the same manner as in Synthetic Example 2 with the exception that the amount of functional group-containing compound (2) was decreased to 3.47 mmol and that 0.37 mmol of tetraglycidyl-1,3-bisaminomethylcyclohexane (hereinafter referred to as "functional group-containing compound (4)) was used together.

The bonded styrene content, vinyl bond content, glass transition temperature and Mooney viscosity of the resulting polymer (A4) and the weight average molecular weight of the base polymer are shown in the following Table 1.

### Synthesis Example 5:

A specific functional group-containing conjugated diene polymer (hereinafter referred to as "polymer (A5)) was obtained in the same manner as in Synthetic Example 1 with the exception that 4.96 mmol of S-trimethylsilylmercaptopropyltriethoxysilane (hereinafter referred to as "functional group-containing compound (5)) was used in place of functional group-containing compound (1).

The bonded styrene content, vinyl bond content, glass transition temperature and Mooney viscosity of the resulting polymer (A5) and the weight average molecular weight of the base polymer are shown in the following Table 1.

### Synthesis Example 6 (for Comparison):

A specific functional group-containing conjugated diene polymer (hereinafter referred to as "polymer (a1)) was obtained in the same manner as in Synthetic Example 1 with the exception that 4.96 mmol of N,N-bis(trimethylsilyl)aminopropylmethyldiethoxysilane (hereinafter referred to as "functional group-containing compound (6)) was used in place of functional group-containing compound (1).

The bonded styrene content, vinyl bond content, glass transition temperature and Mooney viscosity of the resulting polymer (a1) and the weight average molecular weight of the base polymer are shown in the following Table 1.

### Synthesis Example 7 (for Comparison):

A specific functional group-containing conjugated diene polymer (hereinafter referred to as "polymer (a2)) was obtained in the same manner as in Synthetic Example 1 with the exception that 4.96 mmol of methanol was used in place of functional group-containing compound (1).

The bonded styrene content, vinyl bond content, glass transition temperature and Mooney viscosity of the resulting polymer (a2) and the weight average molecular weight of the base polymer are shown in the following Table 1.

**[Table 1]**

| | | | Synthesis Example 1 | Synthesis Example 2 | Synthesis Example 3 | Synthesis Example 4 | Synthesis Example 5 | Synthesis Example 6 | Synthesis Example 7 |
|---|---|---|---|---|---|---|---|---|---|
| Polymer | | | A1 | A2 | A3 | A4 | A5 | a1 | a2 |
| Raw Material | Styrene | (g) | 125 | 125 | 125 | 125 | 125 | 125 | 125 |
| | 1,3-Butadiene | (g) | 375 | 375 | 375 | 375 | 375 | 375 | 375 |
| | Functional Group-Containing Compound (1) | (mmol) | 4.96 | | | | | | |
| | Functional Group-Containing Compound (2) | (mmol) | | 4.96 | | 3.47 | | | |
| | Functional Group-Containing Compound (3) | (mmol) | | | 4.96 | | | | |
| | Functional Group-Containing Compound (4) | (mmol) | | | | 0.37 | | | |
| | Functional Group-Containing Compound (5) | (mmol) | | | | | 4.96 | | |
| | Functional Group-Containing Compound (6) | (mmol) | | | | | | 4.96 | |
| | Methanol | (mmol) | | | | | | | 4.96 |
| Property | Bonded Styrene Content | (% by mass) | 25 | 25 | 25 | 25 | 25 | 25 | 25 |
| | Vinyl Bond Content | (mol%) | 55 | 55 | 55 | 55 | 55 | 56 | 56 |
| | Glass Transition Temperature | (°C) | -30 | -30 | -31 | -30 | -31 | -30 | -30 |
| | Weight Average Molecular Weight of Base Polymer | | 200,000 | 200,000 | 200,000 | 200,000 | 200,000 | 200,000 | 200,000 |
| | Mooney Viscosity | | 10 | 9 | 9 | 53 | 9 | 8 | 8 |

### [Example 1]

Using a plastomill (internal volume: 250 cc) equipped with a temperature controller, a rubber composition of the present invention was produced as shown below.

Thirty parts by mass of butadiene rubber (manufactured by JSR Corporation, product name: "BR01") as component (B), 70 parts by mass of silica (manufactured by Tosoh Silica Corporation, product name: "Nipsil AQ", primary average particle size: 15 nm) as component (C), 3 parts by mass of polyethylene glycol (carbon number: 12) as component (D), 32 parts by mass of an extender oil (manufactured by Sankyo Yuka Kogyo K.K., product name: "SNH46"), 5.6 parts by mass of carbon black (manufactured by Mitsubishi Chemical Corporation, product name: "Diablack N339"), 5.6 parts by mass of a silane coupling agent (manufactured by Evonik Industries AG, product name: "Si 69"), 2 parts by mass of stearic acid, 1 part by mass of an antioxidant (manufactured by Ouchi Shinko Chemical Industrial Co., Ltd., product name: "Nocrac 810NA") and 3 parts by mass of zinc oxide (zinc white) were kneaded under kneading conditions of a rotation number of 60 rpm and a filling rate of 72% for 5 minutes. Thereafter, 70 parts by mass of polymer (A1) was added as component (A) to the resulting kneaded material, followed by kneading under kneading conditions of a rotation number of 60 rpm and a temperature of 120°C for 5 minutes.

Then, the resulting kneaded material was cooled to room temperature, and thereafter, 1.8 parts by mass of a vulcanization accelerator, "Nocceler CZ" (manufactured by Ouchi Shinko Chemical Industrial Co., Ltd.), 1.5 parts by mass of a vulcanization accelerator, "Nocceler D" (manufactured by Ouchi Shinko Chemical Industrial Co., Ltd.) and 1.5 parts by mass of sulfur were added to the kneaded material, and kneaded under kneading conditions of a rotation number of 60 rpm and 80°C for 1 minute to obtain a rubber composition. The resulting rubber composition is referred to as "rubber composition (1)". Further, the Mooney viscosity of rubber composition (1) is shown in the following Table 2.

### [Example 2]

A rubber composition was produced in the same manner as in Example 1 with the exception that 70 parts by mass of polymer (A2) was used in place of polymer (A1), as component (A). The resulting rubber composition is referred to as "rubber composition (2)". Further, the Mooney viscosity of rubber composition (2) is shown in the following Table 2.

### [Example 3]

A rubber composition was produced in the same manner as in Example 1 with the exception that 70 parts by mass of polymer (A3) was used in place of polymer (A1), as component (A). The resulting rubber composition is referred to as "rubber composition (3)". Further, the Mooney viscosity of rubber composition (3) is shown in the following

Table 2.

### [Example 4]

A rubber composition was produced in the same manner as in Example 1 with the exception that 70 parts by mass of polymer (A4) was used in place of polymer (A1), as component (A). The resulting rubber composition is referred to as "rubber composition (4)". Further, the Mooney viscosity of rubber composition (4) is shown in the following Table 2.

### [Example 5]

A rubber composition was produced in the same manner as in Example 1 with the exception that 70 parts by mass of polymer (A5) was used in place of polymer (A1), as component (A). The resulting rubber composition is referred to as "rubber composition (5)". Further, the Mooney viscosity of rubber composition (5) is shown in the following Table 2.

### [Example 6]

A rubber composition was produced in the same manner as in Example 3 with the exception that 3 parts by mass of polyethylene glycol (carbon number: 24) was used in place of polyethylene glycol (carbon number: 12), as component (D). The resulting rubber composition is referred to as "rubber composition (6)". Further, the Mooney viscosity of rubber composition (6) is shown in the following Table 2.

### [Example 7]

A rubber composition was produced in the same manner as in Example 3 with the exception that 3 parts by mass of dimethylstearylamine was used in place of polyethylene glycol (carbon number: 12), as component (D). The resulting rubber composition is referred to as "rubber composition (7)". Further, the Mooney viscosity of rubber composition (7) is shown in the following Table 2.

### [Example 8]

A rubber composition was produced in the same manner as in Example 3 with the exception that 3 parts by mass of oleic amide was used in place of polyethylene glycol (carbon number: 12), as component (D). The resulting rubber composition is referred to as "rubber composition (8)". Further, the Mooney viscosity of rubber composition (8) is shown in the following Table 2.

### [Example 9]

A rubber composition was produced in the same manner as in Example 3 with the exception that 3 parts by mass of zinc oleate was used in place of polyethylene glycol (carbon number: 12), as component (D). The resulting rubber composition is referred to as "rubber composition (9)". Further, the Mooney viscosity of rubber composition (9) is shown in the following Table 2.

### [Example 10]

A rubber composition was produced in the same manner as in Example 3 with the exception that 3 parts by mass of aluminum stearate was used in place of polyethylene glycol (carbon number: 12), as component (D). The resulting rubber composition is referred to as "rubber composition (10)". Further, the Mooney viscosity of rubber composition (10) is shown in the following Table 3.

### [Example 11]

A rubber composition was produced in the same manner as in Example 3 with the exception that 1.5 parts by mass of polyethylene glycol (carbon number: 12) and 1.5 parts by mass of dimethylstearylamine were used in place of 3 parts by mass of polyethylene glycol (carbon number: 12), as component (D). The resulting rubber composition is referred to as "rubber composition (11)". Further, the Mooney viscosity of rubber composition (11) is shown in the following Table 3.

### [Example 12]

A rubber composition was produced in the same manner as in Example 3 with the exception that 1.5 parts by mass of polyethylene glycol (carbon number: 12) and 1.5 parts by mass of zinc oleate were used in place of 3 parts by mass of polyethylene glycol (carbon number: 12), as component (D). The resulting rubber composition is referred to as "rubber composition (12)". Further, the Mooney viscosity of rubber composition (12) is shown in the following Table 3.

### [Example 13]

A rubber composition was produced in the same manner as in Example 3 with the exception that 1.5 parts by mass of dimethylstearylamine and 1.5 parts by mass of zinc oleate were used in place of 3 parts by mass of polyethylene glycol (carbon number: 12), as component (D). The resulting rubber composition is referred to as "rubber composition (13)". Further, the Mooney viscosity of rubber composition (13) is shown in the following Table 3.

### [Example 14]

Using a plastomill (internal volume: 250 cc) equipped with a temperature controller, a rubber composition of the present invention was produced as shown below.

Seventy parts by mass of polymer (A3), 30 parts by mass of butadiene rubber (manufactured by JSR Corporation, product name: "BR01"), 70 parts by mass of silica (manufactured by Tosoh Silica Corporation, product name: "Nipsil AQ", primary average particle size: 15 nm), 3 parts by mass of polyethylene glycol (carbon number: 12), 32 parts by mass of an extender oil (manufactured by Sankyo Yuka Kogyo K.K., product name: "SNH46"), 5.6 parts by mass of carbon black, 5.6 parts by mass of a silane coupling agent (manufactured by Evonik Industries AG, product name: "Si 69"), 2 parts by mass of stearic acid, 1 part by mass of an antioxidant (manufactured by Ouchi Shinko Chemical Industrial Co., Ltd., product name: "Nocrac 810NA") and 3 parts by mass of zinc oxide (zinc white) were kneaded under kneading conditions of a rotation number of 60 rpm and a filling rate of 72% for 10 minutes.

Then, the resulting kneaded material was cooled to room temperature, and thereafter, 1.8 parts by mass of a vulcanization accelerator, "Nocceler CZ" (manufactured by Ouchi Shinko Chemical Industrial Co., Ltd.), 1.5 parts by mass of a vulcanization accelerator, "Nocceler D" (manufactured by Ouchi Shinko Chemical Industrial Co., Ltd.) and 1.5 parts by mass of sulfur were added to the kneaded material, and kneaded under kneading conditions of a rotation number of 60 rpm and a temperature of 110°C for 4 minutes to obtain a rubber composition. The resulting rubber composition is referred to as "rubber composition (14)". Further, the Mooney viscosity of rubber composition (14) is shown in the following Table 3.

### [Comparative Example 1]

A rubber composition was produced in the same manner as in Example 1 with the exception that 70 parts by mass of polymer (a2) was used in place of polymer (A1). The resulting rubber composition is referred to as "rubber composition (15)". Further, the Mooney viscosity of rubber composition (15) is shown in the following Table 3.

### [Comparative Example 2]

A rubber composition was produced in the same manner as in Example 1 with the exception that 70 parts by mass of polymer (A3) was used in place of polymer (A1) and that 3 parts by mass of polyvinyl alcohol (manufactured by Nippon Synthetic Chemical Industry Co., Ltd., Gohsenol GM-14L) was used in place of polyethylene glycol (carbon number: 12). The resulting rubber composition is referred to as "rubber composition (16)". Further, the Mooney viscosity of rubber composition (16) is shown in the following Table 3.

### [Comparative Example 3]

A rubber composition was produced in the same manner as in Example 1 with the exception that 70 parts by mass of polymer (A3) was used in place of polymer (A1) and that 3 parts by mass of polydimethylsiloxane (manufactured by Shin-Etsu Chemical Co., Ltd., KF-96) was used in place of polyethylene glycol (carbon number: 12). The resulting rubber composition is referred to as "rubber composition (17)". Further, the Mooney viscosity of rubber composition (17) is shown in the following Table 3.

### [Comparative Example 4]

A rubber composition was produced in the same manner as in Example 1 with the exception that 70 parts by mass of polymer (a1) was used in place of polymer (A1). The resulting rubber composition is referred to as "rubber composition (18)". Further, the Mooney viscosity of rubber composition (18) is shown in the following Table 3.

### <Evaluation of Rubber Composition>

Each of rubber composition (1) to rubber composition (18) was molded, and thereafter vulcanized using a vulcanizing press under conditions of 160°C to prepare a rubber elastic body.

For these rubber elastic bodies, the following characteristic evaluations were performed. The results thereof are shown in the following Table 2 and Table 3.

### (1) Tensile Strength (300% Modulus):

The tensile strength was measured in accordance with JIS K6251, and there was determined the index at the time when the tensile strength value of the rubber elastic body according to Comparative Example 1 was taken as 100. The larger this index is, the larger the tensile strength is. Thus, it can be evaluated to be excellent in breaking strength.

### (2) Tensile Elongation:

The tensile elongation was measured in accordance with JIS K6251, and there was determined the index at the time when the tensile elongation value of the rubber elastic body according to Comparative Example 1 was taken as 100. The larger this index is, the larger the tensile elongation is. Thus, it can be evaluated to be excellent in breaking strength.

### (3) Wet Skid Resistance (0°C tan δ):

Using a dynamic spectrometer (manufactured by US Rheometric Inc.), measurement was made under conditions of a tensile dynamic distortion of 0.14%, an angular velocity of 100 radians per second and a temperature of 0°C, and there was determined the index at the time when the value of the rubber elastic body according to Comparative Example 1 was taken as 100. The larger value of this index shows the larger and better wet skid resistance.

### (4) Low Hysteresis Loss Property (70°C tan δ):

Using a dynamic spectrometer (manufactured by US Rheometric Inc.), measurement was made under conditions of a tensile dynamic distortion of 0.7%, an angular velocity of 100 radians per second and a temperature of 70°C, and there was determined the index at the time when the value of the rubber elastic body according to Comparative Example 1 was taken as 100. The larger value of this index shows the larger and better low hysteresis loss property.

### (5) Wear Resistance:

Using a Lambourn type wear tester, the wear amount at a slip rate of 25% was measured at room temperature, and there was determined the index at the time when the wear amount value of the rubber elastic body according to Comparative Example 1 was taken as 100. The larger this index is, the more excellent the wear resistance can be evaluated to be.

### (6) Impact Resilience:

Using a tripso type impact resilience test (manufactured by Toyo Seiki Seisaku-sho, Ltd.), measurement was made under conditions of 50°C, and there was determined the index at the time when the value of the rubber elastic body according to Comparative Example 1 was taken as 100. The larger value of this index shows the larger and better impact resilience.

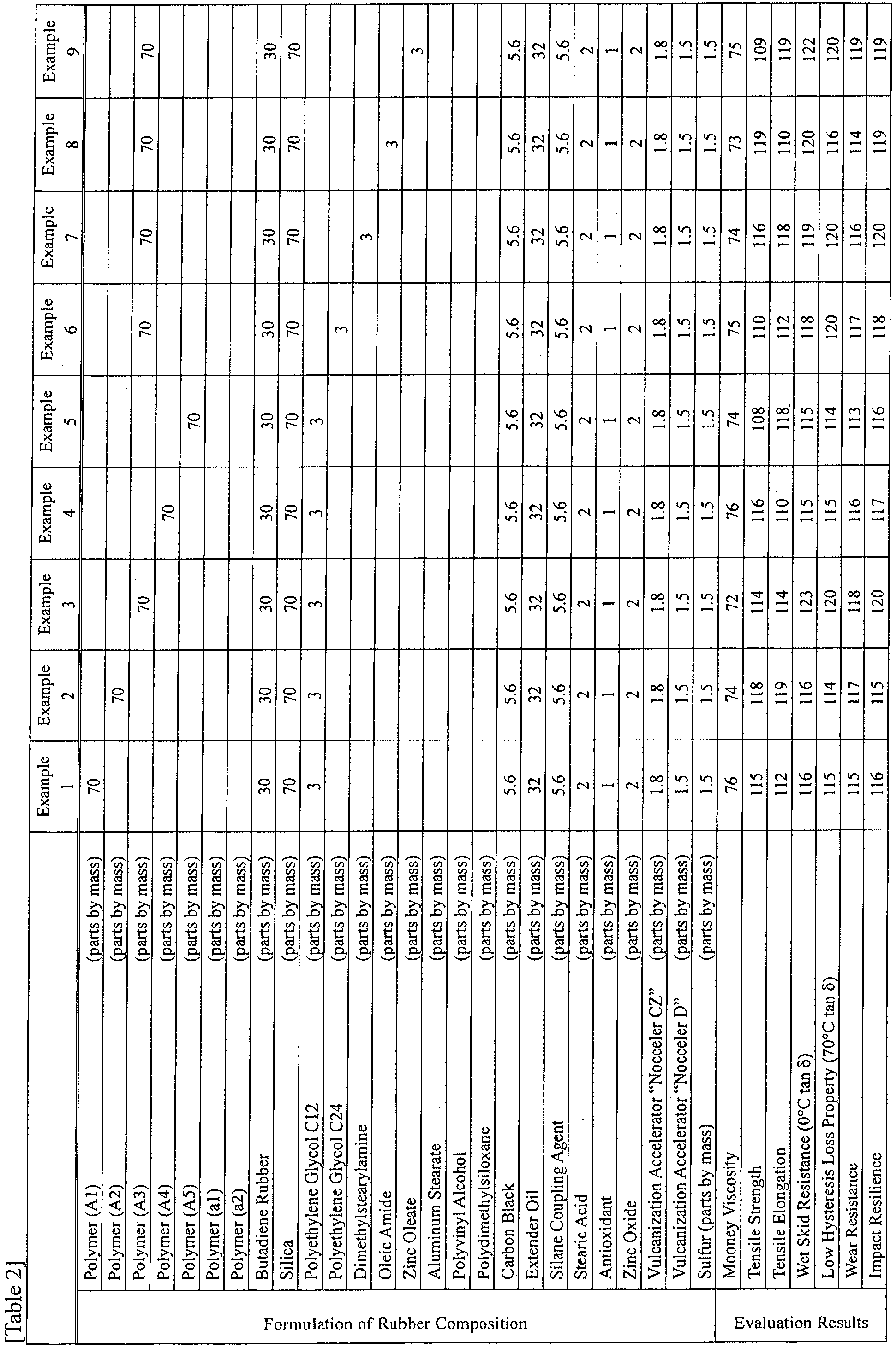

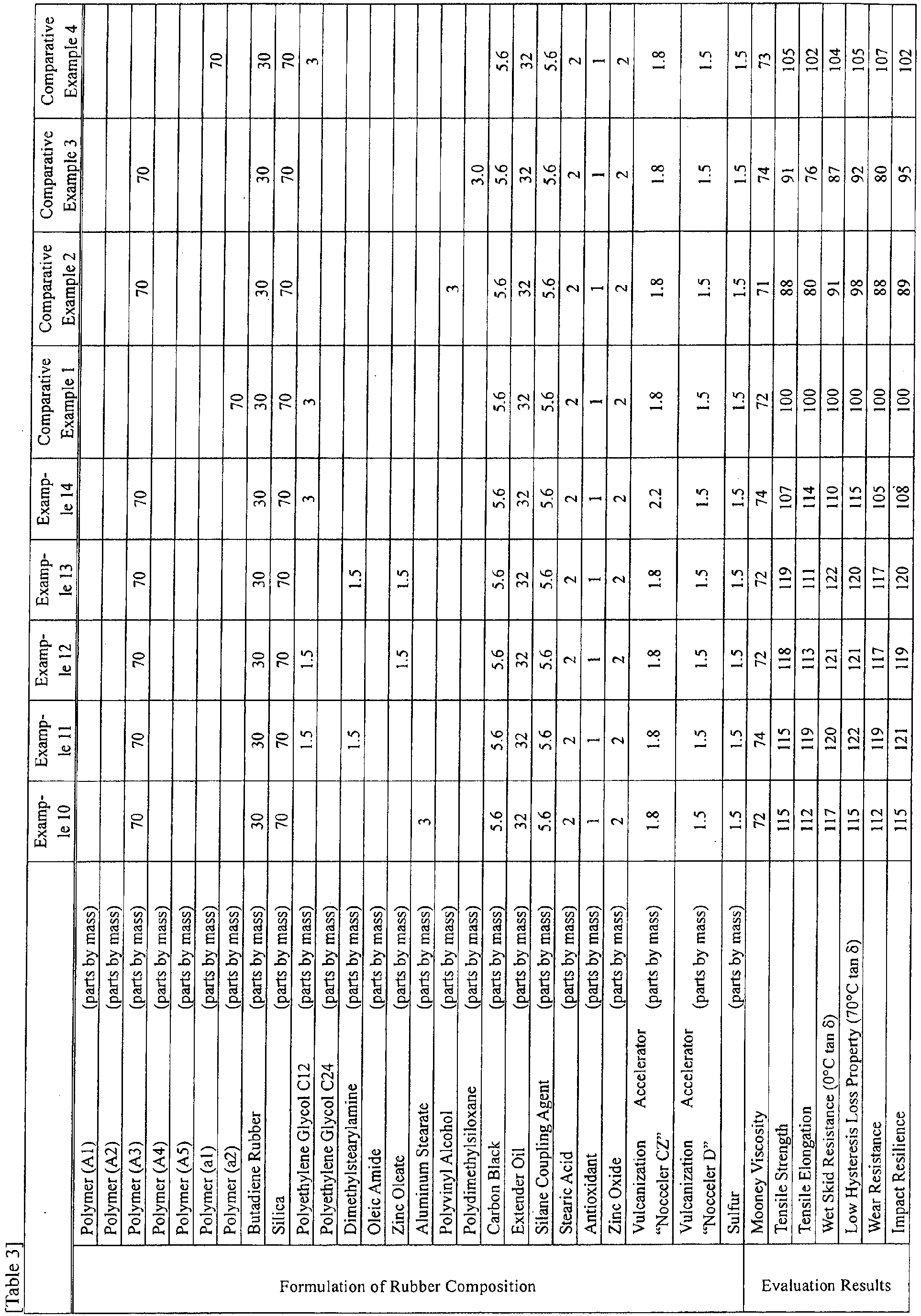

As apparent from the results of Table 2 and Table 3, according to the rubber compositions of Examples 1 to 13, it has been confirmed that there are obtained the rubber elastic bodies having small rolling resistance and moreover excellent impact resilience, and further having high tensile strength and excellent wear resistance.

It has been confirmed that Example 14, in which the 4 components of component (A) to component (D) are blended at the same time, is deteriorated in performance, compared to Example 3.

Comparative Example 1, in which the unmodified conjugated diene polymer is used in place of the specific functional group-containing conjugated diene polymer, is decreased in all evaluation items indicated by the indexes, compared to Examples 1 to 5.

Comparative Example 2, in which polyvinyl alcohol is used in place of the dispersing agent as component (D), is decreased in all evaluation items indicated by the indexes.

Comparative Example 3, in which polydimethylsiloxane is used in place of the dispersing agent as component (D), is decreased in all evaluation items indicated by the indexes.

Comparative Example 4, in which the primary amino group-containing conjugated diene polymer is used in place of the specific functional group-containing conjugated diene polymer as component (A), is decreased in all evaluation items indicated by the indexes, compared to Examples 1 to 14, although it shows better physical property values than Comparative Example 1 in which the unmodified conjugated diene polymer is used.

## Claims

1. A method for producing a rubber composition comprising kneading a rubber component containing a conjugated diene polymer (A) having at least one functional group selected from a tertiary amino group, a thiol group, a hydroxyl group, an epoxy group, a carboxylic acid group, a thioepoxy group, a hydrocarbylthio group and a hydrocarbylsilyl group and a conjugated diene polymer (B) having no functional group chemically bondable to silica, silica (C) and a dispersing agent (D) composed of an organic compound having at least one element selected from the group consisting of nitrogen, carbonyl oxygen and ether oxygen.

2. The method for producing a rubber composition according to claim 1, wherein the dispersing agent (D) is composed of an organic compound represented by the following formula (1) or the following formula (2):
Formula (1): A-X-H
(wherein A represents a group containing nitrogen and/or oxygen, X represents a hydrocarbylene group or a polyoxyalkylene chain each having 1 to 20 carbon atoms, which may be straight-chain or branched, and H represents hydrogen.)
Formula (2): M(A'-X-H)ₙ
(wherein A' represents a group containing nitrogen and/or oxygen, X represents a hydrocarbylene group or a polyoxyalkylene chain each having 1 to 20 carbon atoms, which may be straight-chain or branched, H represents hydrogen, M represents a metal element, and n is an integer of 1 to 6.)

3. The method for producing a rubber composition according to claim 1 or 2, wherein the conjugated diene polymer (B), the silica (C) and the dispersing agent (D) are kneaded, and thereafter, the conjugated diene polymer (A) is added thereto, followed by kneading.

4. The method for producing a rubber composition according to claim 1 or 2, wherein the conjugated diene polymer (A), the conjugated diene polymer (B) and the silica (C) are kneaded, and thereafter, the dispersing agent (D) is added thereto, followed by kneading.

5. A rubber composition obtained by kneading a rubber component comprising a conjugated diene polymer (A) having at least one functional group selected from a tertiary amino group, a thiol group, a hydroxyl group, an epoxy group, a carboxylic acid group, a thioepoxy group, a hydrocarbylthio group and a hydrocarbylsilyl group and a conjugated diene polymer (B) having no functional group chemically bondable to silica, silica (C) and a dispersing agent (D) composed of an organic compound having at least one element selected from the group consisting of nitrogen, carbonyl oxygen and ether oxygen.

6. The rubber composition according to claim 5, wherein the dispersing agent (D) is composed of an organic compound represented by the following formula (1) or the following formula (2):
Formula (1): A-X-H
(wherein A represents a group containing nitrogen and/or oxygen, X represents a hydrocarbylene group or a polyoxyalkylene chain each having 1 to 20 carbon atoms, which may be straight-chain or branched, and H represents hydrogen.)
Formula (2): M(A'-X-H)ₙ
(wherein A' represents a group containing nitrogen and/or oxygen, X represents a hydrocarbylene group or a polyoxyalkylene chain each having 1 to 20 carbon atoms, which may be straight-chain or branched, H represents hydrogen, M represents a metal element, and n is an integer of 1 to 6.)

7. The rubber composition according to claim 5 or 6, obtained by kneading the conjugated diene polymer (B), the silica (C) and the dispersing agent (D), and thereafter, adding the conjugated diene polymer (A) thereto, followed by kneading.

8. The rubber composition according to claim 5 or 6, obtained by kneading the conjugated diene polymer (A), the conjugated diene polymer (B) and the silica (C), and thereafter, adding the dispersing agent (D) thereto, followed by kneading.

9. A rubber composition comprising a rubber component comprising a conjugated diene polymer (A) having at least one functional group selected from a tertiary amino group, a thiol group, a hydroxyl group, an epoxy group, a carboxylic acid group, a thioepoxy group, a hydrocarbylthio group and a hydrocarbylsilyl group and a conjugated diene polymer (B) having no functional group chemically bondable to silica, and at least silica (C) and a dispersing agent (D) composed of an organic compound having at least one element selected from the group consisting of nitrogen, carbonyl oxygen and ether oxygen, which are added thereto.

10. A tire having a tread obtained from the rubber composition according to any one of claims 5 to 9.

## Patentansprüche

1. Verfahren zur Herstellung einer Gummizusammensetzung, das das Kneten einer Gummikomponente, die ein konjugiertes Dienpolymer (A) mit zumindest einer funktionellen Gruppe, die aus einer tertiären Amingruppe, einer Thiolgruppe, einer Hydroxylgruppe, einer Epoxygruppe, einer Carbonsäuregruppe, einer Thioepoxygruppe, einer Hydrocarbylthiogruppe und einer Hydrocarbylsilylgruppe ausgewählt ist, und ein konjugiertes Dienpolymer (B) ohne funktioneller Gruppe, die in der Lage ist, chemisch an Siliziumoxid zu binden, enthält, Siliziumoxids (C) und eines Dispersionsagens (D), das aus einer organischen Verbindung mit zumindest einem Element zusammengesetzt ist, das aus der Gruppe ausgewählt ist, die aus Stickstoff, Carbonylsauerstoff und Ethersauerstoff besteht, umfasst.

2. Verfahren zur Herstellung einer Gummizusammensetzung nach Anspruch 1, wobei das Dispersionsagens (D) aus einer organischen Verbindung zusammengesetzt ist, die durch die folgenden Formel (1) oder die folgenden Formel (2) dargestellt ist:
Formel (1): A-X-H
(wobei A eine Gruppe darstellt, die Stickstoff und/oder Sauerstoff enthält, X eine Hydrocarbylengruppe oder eine Polyoxyalkylenkette mit jeweils 1 bis 20 Kohlenstoffatomen darstellt, welche geradkettig oder verzweigt sein kann und H Wasserstoff darstellt.)
Formel (2): M(A'-X-H)ₙ
(wobei A' eine Gruppe darstellt, die Stickstoff und/oder Sauerstoff enthält, X eine Hydrocarbylengruppe oder eine Polyoxyalkylenkette mit jeweils 1 bis 20 Kohlenstoffatomen darstellt, welche geradkettig oder verzweigt sein kann, H Wasserstoff darstellt, M ein Metallelement darstellt, und n eine ganze Zahl von 1 bis 6 ist.)

3. Verfahren zur Herstellung einer Gummizusammensetzung nach Anspruch 1 oder 2, wobei das konjugierte Dienpolymer (B), das Siliziumoxid (C) und das Dispersionsagens (D) geknetet werden, und anschließend das konjugierte Dienpolymer (A) dazu gegeben wird, gefolgt von Kneten.

4. Verfahren zur Herstellung einer Gummizusammensetzung nach Anspruch 1 oder 2, wobei das konjugierte Dienpolymer (A), das konjugierte Dienpolymer (B) und das Siliciumoxid (C) geknetet werden, und anschließend das Dispersionsagens (D) dazu gegeben wird, gefolgt von Kneten.

5. Gummizusammensetzung, die durch Kneten einer Gummikomponente, die ein konjugiertes Dienpolymer (A) mit zumindest einer funktionellen Gruppe, die aus einer tertiären Amingruppe, einer Thiolgruppe, einer Hydroxylgruppe, einer Epoxygruppe, einer Carbonsäuregruppe, einer Thioepoxygruppe, einer Hydrocarbylthiogruppe und einer Hydrocarbylsilylgruppe ausgewählt ist, und ein konjugiertes Dienpolymer (B) ohne funktioneller Gruppe, die in der Lage ist, chemisch an Siliziumoxid zu binden, umfasst, Siliziumoxids (C) und eines Dispersionsagens (D), das aus einer organischen Verbindung mit zumindest einem Element zusammengesetzt ist, das aus der Gruppe ausgewählt ist, die aus Stickstoff, Carbonylsauerstoff und Ethersauerstoff besteht, erhalten ist.

6. Gummizusammensetzung nach Anspruch 5, wobei das Dispersionsagens (D) aus einer organischen Verbindung zusammengesetzt ist, die durch die folgende Formel (1) oder die folgende Formel (2) dargestellt ist:
Formel (1): A-X-H
(wobei A eine Gruppe darstellt, die Stickstoff und/oder Sauerstoff enthält, X eine Hydrocarbylengruppe oder eine Polyoxyalkylenkette mit jeweils 1 bis 20 Kohlenstoffatomen darstellt, welche geradkettig oder verzweigt sein kann und H Wasserstoff darstellt.)
Formel (2): M(A'-X-H)ₙ
(wobei A' eine Gruppe darstellt, die Stickstoff und/oder Sauerstoff enthält, X eine Hydrocarbylengruppe oder eine Polyoxyalkylenkette mit jeweils 1 bis 20 Kohlenstoffatomen darstellt, welche geradkettig oder verzweigt sein kann, H Wasserstoff darstellt, M ein Metallelement darstellt, und n eine ganze Zahl von 1 bis 6 ist.)

7. Gummizusammensetzung nach Anspruch 5 oder 6, die durch Kneten des konjugierten Dienpolymers (B), des Siliziumoxids (C) und des Dispersionsagens (D), und anschließender Zugabe des konjugierten Dienpolymers (A) hierzu, gefolgt von Kneten, erhalten ist.

8. Gummizusammensetzung nach Anspruch 5 oder 6, die durch Kneten des konjugierten Dienpolymers (A), des konjugierten Dienpolymers (B) und des Siliziumoxids (C), und anschließender Zugabe des Dispersionsagens (D) hierzu, gefolgt von Kneten, erhalten ist.

9. Gummizusammensetzung, die eine Gummikomponente, die ein konjugiertes Dienpolymer (A) mit zumindest einer funktionellen Gruppe, die aus einer tertiären Amingruppe, einer Thiolgruppe, einer Hydroxylgruppe, einer Epoxygruppe, einer Carbonsäuregruppe, einer Thioepoxygruppe, einer Hydrocarbylthiogruppe und einer Hydrocarbylsilylgruppe ausgewählt ist, und ein konjugiertes Dienpolymer (B) ohne funktioneller Gruppe, die in der Lage ist, chemisch an Siliziumoxid zu binden, umfasst, und zumindest Siliciumoxid (C) und ein Dispersionsagens (D), das aus einer organischer Verbindung mit zumindest einem Element zusammengesetzt ist, das aus der Gruppe ausgewählt ist, die aus Stickstoff, Carbonylsauerstoff und Ethersauerstoff besteht, welche dazu zugegeben werden, umfasst.

10. Reifen mit einer Lauffläche, die aus der Gummizusammensetzung nach einem der Ansprüche 5 bis 6 erhalten ist.

## Revendications

1. Procédé de production d'une composition de caoutchouc comprenant le malaxage d'un constituant de caoutchouc contenant un polymère de diène conjugué (A) présentant au moins un groupe fonctionnel choisi parmi un groupe amino tertiaire, un groupe thiol, un groupe hydroxyle, un groupe époxy, un groupe acide carboxylique, un groupe thioépoxy, un groupe hydrocarbylthio et un groupe hydrocarbylsilyle et un polymère de diène conjugué (B) ne présentant pas de groupe fonctionnel pouvant être chimiquement lié à de la silice, de la silice (C) et un agent dispersant (D) constitué d'un composé organique présentant au moins un élément choisi dans le groupe constitué d'azote, d'oxygène de carbonyle et d'oxygène d'éther.

2. Procédé de production d'une composition de caoutchouc selon la revendication 1, dans lequel l'agent dispersant (D) est constitué d'un composé organique représenté par la formule (1) suivante ou la formule (2) suivante :
formule (1) : A-X-H
(où A représente un groupe contenant de l'azote et/ou de l'oxygène, X représente un groupe hydrocarbylène ou une chaîne polyoxyalkylène ayant chacun de 1 à 20 atomes de carbone, lesquels peuvent être linéaires ou ramifiés, et H représente l'hydrogène).
Formule (2) : M(A'-X-H)ₙ
(où A' représente un groupe contenant de l'azote et/ou de l'oxygène, X représente un groupe hydrocarbylène ou une chaîne polyoxyalkylène ayant chacun de 1 à 20 atomes de carbone, lesquels peuvent être linéaires ou ramifiés, H représente l'hydrogène, M représente un élément de métal, et n est un nombre entier de 1 à 6).

3. Procédé de production d'une composition de caoutchouc selon la revendication 1 ou 2, dans lequel le polymère de diène conjugué (B), la silice (C) et l'agent dispersant (D) sont malaxés, et le polymère de diène conjugué (A) leur est après cela ajouté, suivi par un malaxage.

4. Procédé de production d'une composition de caoutchouc selon la revendication 1 ou 2, dans lequel le polymère de diène conjugué (A), le polymère de diène conjugué (B) et la silice (C) sont malaxés, et l'agent dispersant (D) leur est après cela ajouté, suivi par un malaxage.

5. Composition de caoutchouc obtenue par malaxage d'un constituant de caoutchouc comprenant un polymère de diène conjugué (A) présentant au moins un groupe fonctionnel choisi parmi un groupe amino tertiaire, un groupe thiol, un groupe hydroxyle, un groupe époxy, un groupe acide carboxylique, un groupe thioépoxy, un groupe hydrocarbylthio et un groupe hydrocarbylsilyle et un polymère de diène conjugué (B) ne présentant pas de groupe fonctionnel pouvant être chimiquement lié à de la silice, de la silice (C) et un agent dispersant (D) constitué d'un composé organique présentant au moins un élément choisi dans le groupe constitué d'azote, d'oxygène de carbonyle et d'oxygène d'éther.

6. Composition de caoutchouc selon la revendication 5, dans laquelle l'agent dispersant (D) est constitué d'un composé organique représenté par la formule (1) suivante ou la formule (2) suivante :
Formule (1) : A-X-H
(où A représente un groupe contenant de l'azote et/ou de l'oxygène, X représente un groupe hydrocarbylène ou une chaîne polyoxyalkylène ayant chacun de 1 à 20 atomes de carbone, lesquels peuvent être linéaires ou ramifiés, et H représente l'hydrogène).
Formule (2) : M(A'-X-H)ₙ
(où A' représente un groupe contenant de l'azote et/ou de l'oxygène, X représente un groupe hydrocarbylène ou une chaîne polyoxyalkylène ayant chacun de 1 à 20 atomes de carbone, lesquels peuvent être linéaires ou ramifiés, H représente l'hydrogène, M représente un élément de métal, et n est un nombre entier de 1 à 6).

7. Composition de caoutchouc selon la revendication 5 ou 6, obtenue par malaxage du polymère de diène conjugué (B), de la silice (C) et de l'agent dispersant (D), et après cela, par addition du polymère de diène conjugué (A) à ceux-ci, suivie par un malaxage.

8. Composition de caoutchouc selon la revendication 5 ou 6, obtenue par malaxage du polymère de diène conjugué (A), du polymère de diène conjugué (B) et de la silice (C), et après cela, par addition de l'agent dispersant (D) à ceux-ci, suivie par un malaxage.

9. Composition de caoutchouc comprenant un constituant de caoutchouc comprenant un polymère de diène conjugué (A) présentant au moins un groupe fonctionnel choisi parmi un groupe amino tertiaire, un groupe thiol, un groupe hydroxyle, un groupe époxy, un groupe acide carboxylique, un groupe thioépoxy, un groupe hydrocarbylthio et un groupe hydrocarbylsilyle et un polymère de diène conjugué (B) ne présentant pas de groupe fonctionnel pouvant être chimiquement lié à de la silice, et au moins de la silice (C) et un agent dispersant (D) constitué d'un composé organique présentant au moins un élément choisi dans le groupe constitué d'azote, d'oxygène de carbonyle et d'oxygène d'éther, qui leur sont ajoutés.

10. Pneu présentant une bande de roulement obtenue à partir de la composition de caoutchouc selon l'une quelconque des revendications 5 à 9.
